# FASCICULE DE BREVET EUROPEEN

(11) **EP 3 735 524 B1**
(45) Date de publication et mention de la délivrance du brevet: **31.08.2022**
(21) Numéro de dépôt: 19710755.0
(22) Date de dépôt: 18.02.2019
(51) Int. Cl.: F02C 6/08, F02C 7/18, F02K 3/06

(54) **TURBOMACHINE COMPORTANT UN ÉCHANGEUR DE CHALEUR CONSTITUÉ D'AU MOINS UNE PLATEFORME INTER AUBES**
TURBINENTRIEBWERK MIT EINEM WÄRMETAUSCHER BESTEHEND AUS MINDESTENS EINEM DECK ZWISCHEN SCHAUFELN
TURBINE ENGINE COMPRISING A HEAT EXCHANGER CONSISTING OF AT LEAST ONE DECK BETWEEN VANES

(30) Priorité: 23.02.2018 FR 1851623
(43) Date de publication de la demande: 11.11.2020
(73) Titulaire: SAFRAN AIRCRAFT ENGINES, 75015 Paris (FR)
(72) Inventeur: PIKOVSKY, Catherine, 77550 MOISSY-CRAMAYEL (FR); PERDRIGEON, Christophe, Marcel, Lucien, 77550 MOISSY-CRAMAYEL (FR); ZACCARDI, Cédric, 77550 MOISSY-CRAMAYEL (FR)
(74) Mandataire: Brevalex
(86) Numéro de dépôt international: PCT/FR2019/050357
(87) Numéro de publication internationale: WO 2019/162600

(56) Documents cités:
- EP-A1- 2 762 685
- EP-A2- 0 127 562
- CA-A1- 2 697 741
- US-A1- 2013 192 253

## Description

### DOMAINE TECHNIQUE

L'invention concerne une turbomachine, telle qu'une turbomachine d'aéronef comportant des moyens de refroidissement d'un composant situé à proximité d'un axe principal de la turbomachine.

L'invention concerne plus particulièrement une turbomachine comportant des moyens de refroidissement d'un arbre rotatif basse pression et/ou de chambres de pressurisation d'huile de lubrification.

### ÉTAT DE LA TECHNIQUE ANTÉRIEURE

Dans les turbomachines actuelles, il y a de nombreux circuits d'air interne moteur. Ces circuits assurent différentes fonctions.

Parmi ces circuits, un circuit d'air réalise à la fois la fonction de pressurisation d'enceintes d'huile de lubrification pour éviter que l'huile ne sorte de ces enceintes et la fonction de refroidissement de l'arbre basse pression.

L'air de ce circuit est prélevé au niveau du compartiment inter-veine, en aval du compresseur basse pression, de préférence entre le compresseur basse pression et le compresseur haute pression.

Cet air est ensuite évacué par les déshuileurs, pour l'air passant par les enceintes et à l'aval de la turbine basse pression pour le reste.

Ce circuit va subir des pertes de charges dues aux changements de rayons, trous, joints, etc. Il faut donc que le rapport de pression (pression prélevée / pression sortante) soit assez grand pour que l'air circule correctement et avec le débit souhaité.

Parmi les contraintes sur ce circuit d'air, il faut que la température de l'air soit assez froide pour refroidir l'arbre basse pression et pour ne pas trop réchauffer l'huile des enceintes. La pression de l'air doit être suffisante pour que le rapport de pression mentionné précédemment soit assez important et permette de faire circuler le débit spécifié.

Aussi, dans certaines turbomachines, le cycle thermodynamique est tel que le rapport de pressions est trop faible pour que ce circuit respecte ces fonctions. Il faut donc trouver une solution de contournement.

L'invention a pour but de proposer une turbomachine comportant des moyens permettant de refroidir efficacement le circuit d'air prélevé en aval du compresseur basse pression, tout en produisant de faibles pertes de charge. Une turbomachine selon l'art antérieur est divulguée dans les documents EP 0 127 562 A2 et EP 2 762 685 A1.

### EXPOSÉ DE L'INVENTION

L'invention concerne une turbomachine d'aéronef comportant une veine primaire d'écoulement d'air dans laquelle sont aménagés un compresseur basse pression et un compresseur haute pression,
une veine secondaire d'écoulement d'air qui est située autour de la veine primaire et coaxialement à la veine primaire, comportant un redresseur du flux d'air s'écoulant dans la veine secondaire, comportant une pluralité d'aubes réparties autour d'un axe principal A de la turbomachine et qui comporte des plateformes inter-aubes dont chacune est située entre les extrémités radiales internes ou entre les extrémités radiales externes de deux aubes adjacentes, chaque plateforme comportant une paroi délimitant en partie la veine secondaire,
un circuit d'air pressurisé prélevant de l'air entre le compresseur basse pression et le compresseur haute pression ou dans le compresseur haute pression, pour produire un flux d'air pressurisé qui alimente au moins un composant de la turbomachine, ledit au moins un composant étant situé radialement dans la turbomachine à proximité d'un axe principal A de la turbomachine par rapport à la veine primaire,
dans laquelle le circuit d'air pressurisé comporte un échangeur de chaleur entre le flux d'air pressurisé et le flux d'air s'écoulant dans la veine secondaire,
caractérisée en ce que l'échangeur de chaleur est formé par au moins une plateforme au travers de laquelle l'air pressurisé s'écoule, ladite paroi de la plateforme réalisant l'échange de chaleur entre l'air pressurisé et le flux d'air s'écoulant dans la veine secondaire.

De préférence, la plateforme comporte une conduite dans laquelle l'air pressurisé s'écoule qui est en contact thermique avec la paroi de la plateforme par soudage.

De préférence, la conduite est réalisée d'une seule pièce avec au moins une partie de la De préférence, la conduite consiste en un élément rapporté qui est fixé à la paroi de la plateforme.

De préférence, la plateforme comporte un port d'entrée de l'air pressurisé qui est situé à une extrémité amont de la plateforme et un port de sortie de l'air pressurisé qui est situé à une extrémité aval de la plateforme, selon le sens d'écoulement d'air dans la veine secondaire.

De préférence, la plateforme comporte un port d'entrée de l'air pressurisé qui est situé à une extrémité aval de la plateforme et un port de sortie de l'air pressurisé qui est situé à une extrémité amont de la plateforme, selon le sens d'écoulement d'air dans la veine secondaire.

De préférence, la plateforme est réalisée en un matériau conducteur thermique.

De préférence, la turbomachine comporte un compartiment inter-veine situé entre la veine primaire et la veine secondaire, et le circuit d'air pressurisé comporte, dans le sens d'écoulement d'air dans celui-ci :
- au moins un point de prélèvement d'air qui est porté par une paroi radialement interne du compartiment inter-veine ;
- un tronçon amont s'étendant au travers du compartiment inter-veine jusqu'à la veine secondaire ;
- ladite au moins une plateforme ;
- un tronçon aval s'étendant au travers du compartiment inter-veine depuis la veine secondaire jusqu'à la veine primaire et s'étendant au travers d'un bras profilé traversant la veine primaire ;
- des moyens de répartition de l'air pressurisé vers ledit au moins un composant de la turbomachine.

De préférence, ledit au moins un composant de la turbomachine est un arbre basse pression de la turbomachine.

De préférence, ledit au moins composant est une enceinte de pressurisation d'huile de lubrification.

De préférence, ledit au moins composant est un réducteur de vitesse qui est agencé entre l'arbre basse pression et une soufflante de la turbomachine.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en section axiale d'une turbomachine d'aéronef comportant un circuit d'air pressurisé réalisé selon l'invention ;
- la figure 2 est un détail en perspective à plus grande échelle d'une partie du redresseur montrant l'implantation de plateformes inter aubes agencées au niveau du moyeu de la turbomachine ;
- la figure 3 est un détail à plus grande échelle d'une plateforme représentée à la figure 2, comportant une conduite de circulation du flux d'air pressurisé ;
- la figure 4 est une vue montrant un mode de solidarisation de la conduite à un corps de la plateforme ;
- la figure 5 est une représentation d'un autre mode de réalisation de la plateforme comportant une cavité et une plaque rapportée.

### EXPOSÉ DÉTAILLÉ DE MODES DE RÉALISATION PARTICULIERS

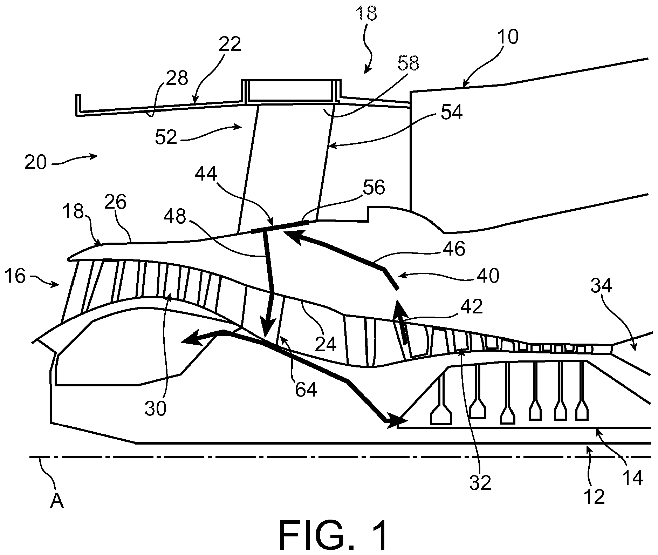

On a représenté à la figure 1 une turbomachine 10 d'aéronef.

La turbomachine 10 comporte, en s'éloignant de son axe principal A, un arbre basse pression 12, un arbre haute pression 14, une veine primaire 16 d'écoulement d'air, une veine secondaire 20 d'écoulement d'air, un compartiment inter-veine 18 séparant la veine primaire 16 et la veine secondaire 20 et une virole 22 de carter intermédiaire.

Le compartiment inter-veine 18, aussi appelé "core compartiment", est délimité radialement par une paroi radialement interne 24 délimitant l'extérieur de la veine primaire 16 et une paroi radialement externe 26 délimitant l'intérieur de la veine secondaire 20. La virole 22 comporte une paroi radialement interne 28 délimitant l'extérieur de la veine secondaire 20.

La veine primaire 16 comporte, d'amont en aval, selon le sens d'écoulement d'air dans celle-ci, c'est-à-dire ici de gauche à droite en se reportant à la figure 1, un compresseur basse pression 30, un compresseur haute pression 32, une chambre de combustion 34, une turbine haute pression et une turbine basse pression (non représentées).

La veine secondaire 20 comporte un redresseur 52 qui a pour but de rediriger le flux d'air s'écoulant dans la veine secondaire 20, afin que celui-ci ait un écoulement orienté axialement.

Le redresseur 52 comporte une pluralité d'aubes 54 réparties régulièrement autour de l'axe principal A de la turbomachine 10 qui agissent sur le flux d'air circulant dans la veine secondaire 20 pour rediriger le flux d'air dans l'axe principal de la turbomachine 10.

Chaque aube 54 s'étend principalement radialement par rapport à l'axe principal A et comporte une extrémité radiale de pied 56 radialement interne pour sa liaison avec le compartiment inter-veine 18 et une extrémité radiale de tête 58 radialement externe pour sa liaison avec la virole 22.

La paroi radialement externe 26 du compartiment inter-veine 18 et la paroi radialement 28 interne de la virole 22 comportent chacune zone de liaison (non représentée) au niveau de laquelle les aubes 54 sont reliées, qui est par exemple un bossage annulaire.

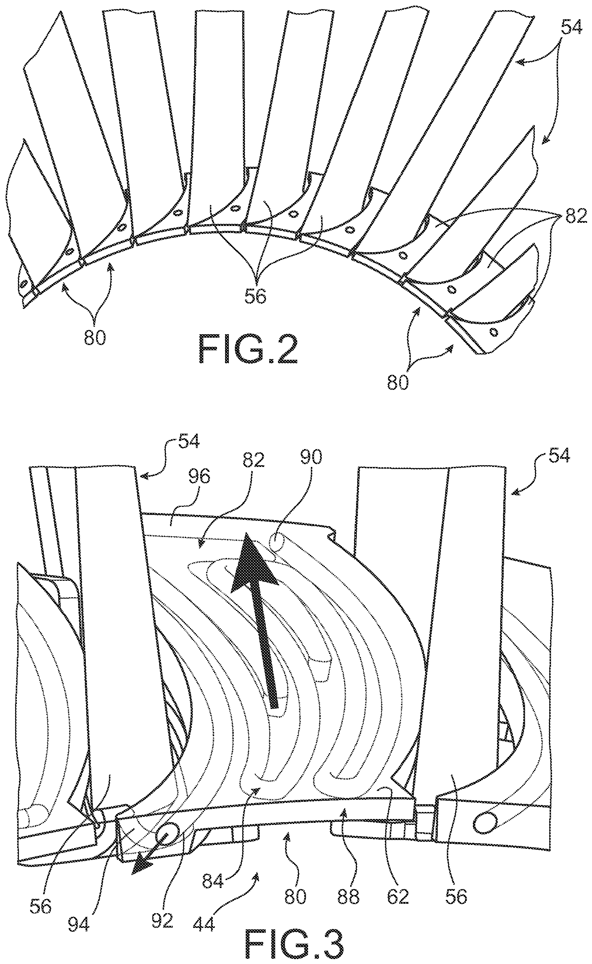

Comme on peut le voir par exemple à la figure 2, des plateformes 80 sont disposées entre les pieds 56 des aubes 54 adjacentes. Chacune de ces plateformes 80 comporte une paroi 82 qui forme un secteur d'anneau coaxial à l'axe principal A. L'ensemble des parois 82 des plateformes 80 forme un anneau qui prolonge la paroi radialement externe 26 du compartiment inter-veine 18, au niveau de la zone de liaison.

Aussi, des plateformes (non représentées) similaires sont agencées entre les têtes 58 des aubes 54, chacune de ces plateformes comporte une paroi qui forme un secteur d'anneau coaxial à l'axe principal A, pour prolonger la paroi radialement interne 28 interne de la virole 22, au niveau de la zone de liaison.

Ainsi, la paroi 82 de chaque plateforme 80 délimite en partie la veine secondaire 20.

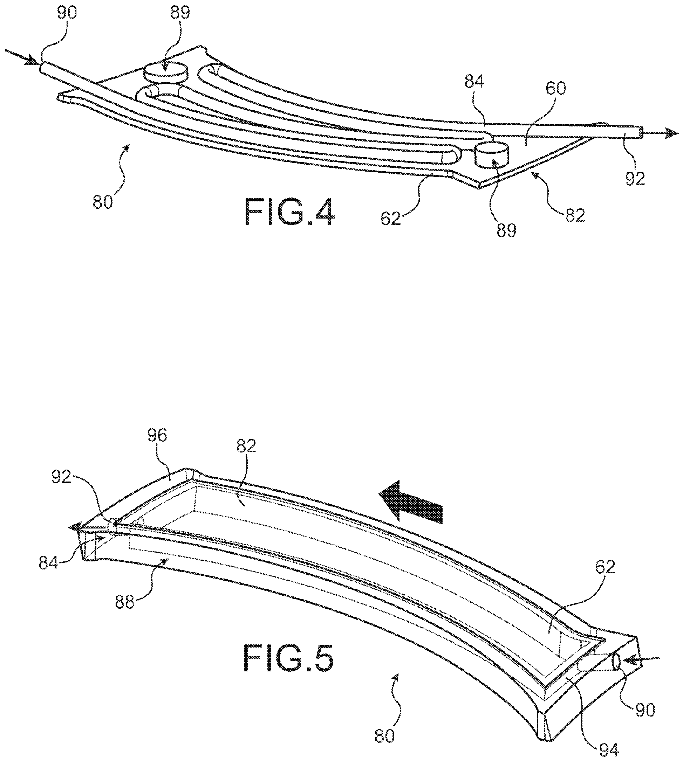

Chaque plateforme 80 comporte en outre des moyens pour sa solidarisation au compartiment inter-veine 18 ou à la virole 22. De tels moyens de solidarisation sont par exemple des plots de fixation 89 montés sur une face interne 60 de la paroi 82 de la plateforme 80, comme on l'a représenté à la figure 4.

La turbomachine 10 comporte en outre des circuits d'air qui sont répartis à l'intérieur de celle-ci pour refroidir plusieurs composants de la turbomachine 10.

Parmi ces circuits, comme on peut le voir à la figure 1, la turbomachine 10 comporte un circuit d'air pressurisé 40 qui est conçu pour refroidir l'arbre basse pression 12 et pour alimenter en air pressurisé des enceintes contenant de l'huile de lubrification de parties mobiles, qui sont par exemple situées au niveau de l'arbre basse pression 12.

Cet air pressurisé peut aussi alimenter un réducteur de vitesse (non représenté) qui est agencé entre l'arbre basse pression 12 et la soufflante de la turbomachine.

Le réducteur de vitesse permet de dissocier la vitesse de rotation de la soufflante avec celle de l'arbre basse pression 12 par lequel la soufflante est entraînée. Cela permet notamment de réduire la vitesse de rotation des pales de la soufflante par rapport à celle des compresseurs basse pression, et ainsi d'optimiser leurs efficacités respectives et donc d'améliorer le rendement de propulsion. Un tel réducteur est particulièrement avantageux dans le cas d'un turboréacteur à fort taux de dilution, c'est-à-dire pour lequel le rapport entre la quantité de flux d'air s'écoulant dans la veine secondaire.

Un taux de dilution élevé permet de réduire la consommation du moteur, mais conduit à des dimensions de soufflante élevées. La vitesse de rotation de la soufflante est alors limitée, et restreint d'autant celle du compresseur basse pression et de la turbine basse pression.

Ce circuit d'air pressurisé 40 comporte au moins un point de prélèvement d'air 42 qui est situé sur la paroi radialement interne 24 du compartiment inter-veine 18. Ce point de prélèvement 42 est situé entre le compresseur basse pression 30 et le compresseur haute pression 32 ou bien dans le compresseur haute pression 32.

Dans ce dernier cas, le point de prélèvement d'air 42 est situé au niveau de l'un des étages du compresseur haute pression 32 qui est déterminé en fonction de la pression de l'air pressurisé, sa température et de la possibilité de réaliser un prélèvement sur les premiers étages du compresseurs haute pression 32 malgré la présence d'aubes à calage variables (communément désignées VSV pour Variable Stator Vanes).

L'air prélevé est à une pression suffisamment importante pour pressuriser les enceintes d'huile. Par contre, la température de cet air est trop élevée pour permettre le refroidissement de l'arbre basse pression 12 et aussi pour avoir de bonnes conditions de fonctionnement du circuit de lubrification.

Le circuit d'air pressurisé 40 comporte à cet effet un échangeur de chaleur 44 permettant de réduire la température de l'air pressurisé.

Cet échangeur de chaleur 44 est du type air-air et la source d'air froid est constituée par l'air circulant dans la veine secondaire 20.

L'échangeur de chaleur 44 est ainsi situé au niveau de la veine secondaire 20, comme on le décrira par la suite.

Le circuit d'air pressurisé 40 comporte, dans le sens d'écoulement d'air dans celui-ci, un tronçon amont 46 qui s'étend depuis le point de prélèvement d'air 42 jusqu'à l'échangeur de chaleur 44, l'échangeur de chaleur 44, un tronçon aval 48 qui s'étend depuis l'échangeur de chaleur 44 jusqu'à l'arbre basse pression 12 et des moyens (non représentés) de répartition de l'air pressurisé en direction des points de refroidissement de l'arbre basse pression 12 et des enceintes de pressurisation d'huile.

Ainsi, le tronçon amont 46 du circuit d'air pressurisé 40 s'étend au travers du compartiment inter-veine 18, depuis sa paroi radialement interne 24 au niveau de laquelle le tronçon amont 46 est relié au point de prélèvement d'air 42, jusqu'à la paroi radialement externe 26 du compartiment inter-veine 18, au niveau de laquelle il est relié à l'échangeur de chaleur 44.

Aussi le tronçon aval 48 du circuit d'air pressurisé s'étend au travers du compartiment inter-veine 18, à partir de sa paroi radialement externe au niveau de laquelle il est relié à l'échangeur de chaleur 44 et il traverse aussi la veine primaire 16 dans des bras profilés 64 placés entre le compresseur basse pression 30 et haute pression 32, avantageusement.

Comme on l'a dit plus haut, la source d'air froid de l'échangeur de chaleur 44 est constituée de l'air circulant dans la veine secondaire 20.

Comme on peut le voir aux figures 3 à 5, l'échangeur de chaleur 44 est formé par au moins une plateforme 80, au travers de laquelle l'air pressurisé s'écoule, pour échanger de la chaleur avec l'air s'écoulant dans la veine secondaire 20.

Selon un mode de réalisation, l'échangeur de chaleur 44 est formé par une seule plateforme 80. Selon un autre mode de réalisation, l'échangeur de chaleur est formé d'une pluralité de plateforme 80 qui sont adjacentes les unes aux autres.

Dans la description qui va suivre, on fera référence à une plateforme 80. Il sera compris que cette description s'applique à la fois pour le premier mode de réalisation selon lequel l'échangeur de chaleur 44 comporte une seule plateforme 80, que le mode de réalisation selon lequel l'échangeur de chaleur comporte plusieurs plateformes 80, la description de chacune des plateformes 80 constituant l'échangeur de chaleur 44 se déduisant ce cette description.

Aussi, dans la description qui va suivre, on décrira une plateforme 80 qui est située entre les pieds 56 de deux aubes 54 adjacentes, il sera compris que cette description peut aussi s'appliquer à un échangeur de chaleur comportant au moins une plateforme située entre les têtes 58 de deux aubes 54 adjacentes.

La paroi 82 de la plateforme 80, qui délimite en partie la veine secondaire 20 est en contact direct avec l'air froid s'écoulant dans la veine secondaire 20.

La plateforme 80 comporte une conduite 84 aménagée dans son volume intérieur, qui est en contact thermique avec la paroi 82 et au travers de laquelle le flux d'air pressurisé s'écoule.

La paroi 82 de la plateforme 80 réalise alors un échange de chaleur entre l'air pressurisé et l'air s'écoulant dans la veine secondaire 20.

Selon un premier mode de réalisation que l'on peut voir aux figures 3 et 4, la conduite 84 est de forme tubulaire et elle est agencée à l'intérieur de la plateforme 80 en formant un serpentin par exemple.

Selon un premier aspect de ce premier mode de réalisation, et comme on peut le voir à la figure 4, la conduite 84 est solidarisée à la paroi 82 de la plateforme 80 par soudage et un échange de chaleur par contact est possible entre la conduite et la paroi 82.

Selon ce premier aspect, la plateforme 80 est formée uniquement par la paroi 82 qui porte la conduite 84 sur sa face interne 60 opposée à la face 62 reconstituant la veine secondaire. Des moyens de conduction thermique tels qu'une pâte thermique peuvent être interposés entre la paroi 82 de la plateforme 80 et la conduite 84 pour favoriser l'échange de chaleur entre les deux éléments.

Selon un deuxième aspect de ce premier mode de réalisation, et comme on peut le voir à la figure 3, la conduite 84 est réalisée en une seule pièce avec la paroi 82 de la plateforme 80.

Pour cela, la plateforme 80 est formée lors de la réalisation de la plateforme 80. Par exemple, la plateforme 80 et la conduite 84 sont formées simultanément lors d'une opération de moulage ou de fabrication additive.

Selon une variante de réalisation, la plateforme 80 est réalisée en une seule pièce, par moulage ou par fabrication additive et la conduite 84 est ensuite formée dans la plateforme 80 par enlèvement de matière, par exemple par usinage de la plateforme 80.

Selon un deuxième mode de réalisation représenté à la figure 5, la conduite 84 comporte une cavité 86 formée dans la plateforme 80. Cette cavité 86 délimite un volume important permettant de faciliter les échanges de chaleur entre le flux d'air pressurisé et le flux d'air s'écoulant dans la veine secondaire.

Selon un premier aspect de ce deuxième mode de réalisation, la plateforme 80 est réalisée en deux parties, et comporte un corps 88 sur lequel la paroi 82 est rapportée.

La cavité 86 est réalisée dans le corps 88 de la plateforme 80. La cavité 86 est ouverte dans une face du corps 88 orientée radialement vers la veine secondaire 20 et l'ouverture formée est obturée par la paroi 82 de la plateforme 80, permettant de réaliser un contact thermique direct du flux d'air pressurisé avec la paroi 82.

Selon un deuxième aspect de ce deuxième mode de réalisation, la plateforme 80 est réalisée en une seule pièce dans laquelle la cavité 86 est formée. De préférence, une telle plateforme 80 est réalisée par fabrication additive.

Quel que soit le mode de réalisation de la conduite 84, la plateforme 80 comporte un port d'entrée 90 par lequel le flux d'air pressurisé pénètre dans la conduite 84 et un port de sortie 92 par lequel le flux d'air pressurisé refroidi sort de la conduite 84.

Chacun du port d'entrée 90 et du port de sortie 92 est disposé au niveau de l'une de l'extrémité axiale amont 94 de la plateforme 80 ou de l'extrémité axiale aval 96 de la plateforme 80.

Il sera compris qu'ici, l'extrémité axiale amont 94 de la plateforme 80 est l'extrémité axiale de la plateforme 80 située en amont de la plateforme 80 selon le sens d'écoulement du flux d'air dans la veine secondaire, c'est-à-dire l'extrémité axiale de gauche à la figure 1 et l'extrémité axiale aval 96 de la plateforme 80 est l'extrémité axiale de la plateforme 80 située en aval de la plateforme 80 selon le sens d'écoulement du flux d'air dans la veine secondaire, c'est-à-dire l'extrémité axiale de droite à la figure 1.

Selon un premier exemple représenté par exemple à la figue 5, le port d'entrée 90 est situé au niveau de l'extrémité amont 94 de la plateforme 80 et le port de sortie 92 est situé au niveau de l'extrémité aval 96 de la plateforme 80.

Selon un deuxième exemple, représenté à la figure 3, le port d'entrée 90 est situé au niveau de l'extrémité aval 96 de la plateforme 80 et le port de sortie 92 est situé au niveau de l'extrémité amont 94 de la plateforme 80.

Selon ce deuxième exemple, le sens d'écoulement du flux d'air pressurisé dans la plateforme 80 est contraire au sens d'écoulement du flux d'air dans la veine secondaire. L'échange de chaleur a alors un meilleur rendement.

La plateforme 80 a principalement un rôle aérodynamique, pour reconstituer la veine d'écoulement d'air 20 afin de limiter les perturbations dans le flux d'air la traversant, au niveau des têtes et des pieds des aubes 54.

Ainsi, la plateforme 80 n'a pas de rôle structurel pour lequel sa conception a des contraintes relatives aux efforts que la plateforme 80 doit subir.

Par conséquent, la plateforme 80 peut être réalisée en un matériau n'ayant pas de propriétés particulières de résistance mécanique, mais ayant des propriétés optimisées pour l'échange de chaleur entre le flux d'air pressurisé et le flux d'air dans la veine secondaire 20.

Ce matériau est de préférence un bon conducteur thermique comme par exemple de l'aluminium, qui est en outre un matériau léger.

## Revendications

1. Turbomachine (10) d'aéronef comportant une veine primaire (16) d'écoulement d'air dans laquelle sont aménagés un compresseur basse pression (30) et un compresseur haute pression (32),
une veine secondaire (20) d'écoulement d'air qui est située autour de la veine primaire (16) et coaxialement à la veine primaire (16), comportant un redresseur (52) du flux d'air s'écoulant dans la veine secondaire, comportant une pluralité d'aubes réparties autour d'un axe principal (A) de la turbomachine (10) et qui comporte des plateformes (80) inter-aubes dont chacune est située entre les extrémités radiales internes (56) ou entre les extrémités radiales externes (58) de deux aubes (54) adjacentes, chaque plateforme (80) comportant une paroi (82) délimitant en partie la veine secondaire (20),
un circuit d'air pressurisé (40) prélevant de l'air entre le compresseur basse pression (30) et le compresseur haute pression (32) ou dans le compresseur haute pression (32), pour produire un flux d'air pressurisé qui alimente au moins un composant (12) de la turbomachine (10), ledit au moins un composant (12) étant situé radialement dans la turbomachine (10) à proximité d'un axe principal (A) de la turbomachine (10) par rapport à la veine primaire (16),
dans laquelle le circuit d'air pressurisé (40) comporte un échangeur de chaleur (44) entre le flux d'air pressurisé et le flux d'air s'écoulant dans la veine secondaire (20),
**caractérisée en ce que** l'échangeur de chaleur (44) est formé par au moins une plateforme (80) au travers de laquelle l'air pressurisé s'écoule, ladite paroi (82) de la plateforme (80) réalisant l'échange de chaleur entre l'air pressurisé et le flux d'air s'écoulant dans la veine secondaire (20).

2. Turbomachine (10) selon la revendication précédente, **caractérisée en ce que** la plateforme (80) comporte une conduite (84) dans laquelle l'air pressurisé s'écoule qui est en contact thermique avec la paroi de la plateforme (80) par soudage.

3. Turbomachine (10) selon la revendication 2, **caractérisée en ce que** la conduite est réalisée d'une seule pièce avec au moins une partie de la plateforme (80).

4. Turbomachine selon la revendication 2, **caractérisée en ce que** la conduite (84) consiste en un élément rapporté qui est fixé à la paroi (82) de la plateforme (80).

5. Turbomachine (10) selon l'une quelconque des revendications précédentes, **caractérisée en ce que** la plateforme (80) comporte un port d'entrée (90) de l'air pressurisé qui est situé à une extrémité amont (94) de la plateforme (80) et un port de sortie (92) de l'air pressurisé qui est situé à une extrémité aval (96) de la plateforme (80), selon le sens d'écoulement d'air dans la veine secondaire (20).

6. Turbomachine (10) selon l'une quelconque des revendications 1 à 4, **caractérisée en ce que en ce que** la plateforme (80) comporte un port d'entrée (90) de l'air pressurisé qui est situé à une extrémité aval (96) de la plateforme (80) et un port de sortie (92) de l'air pressurisé qui est situé à une extrémité amont (94) de la plateforme (80), selon le sens d'écoulement d'air dans la veine secondaire (20).

7. Turbomachine (10) selon l'une quelconque des revendications précédentes, **caractérisée en ce que** la plateforme (80) est réalisée en un matériau conducteur thermique.

8. Turbomachine (10) selon l'une quelconque des revendications précédentes, qui comporte un compartiment inter-veine (18) situé entre la veine primaire et la veine secondaire,
**caractérisée en ce que** le circuit d'air pressurisé (40) comporte, dans le sens d'écoulement d'air dans celui-ci :
- au moins un point de prélèvement d'air (42) qui est porté par une paroi radialement interne (24) du compartiment inter-veine (18) ;
- un tronçon amont (46) s'étendant au travers du compartiment inter-veine (18) jusqu'à la veine secondaire (20) ;
- ladite au moins une plateforme (80) ;
- un tronçon aval (48) s'étendant au travers du compartiment inter-veine (18) depuis la veine secondaire (20) jusqu'à la veine primaire (16) et s'étendant au travers d'un bras profilé(80) traversant la veine primaire (16) ;
- des moyens de répartition de l'air pressurisé vers ledit au moins un composant (12) de la turbomachine (10).

9. Turbomachine (10) selon l'une quelconque des revendications précédentes, **caractérisée en ce que** ledit au moins un composant de la turbomachine est un arbre basse pression (12) de la turbomachine (10).

10. Turbomachine (10) selon l'une quelconque des revendications précédentes, **caractérisée en ce que** ledit au moins composant est une enceinte de pressurisation d'huile de lubrification.

11. Turbomachine (10) selon l'une quelconque des revendications précédentes, **caractérisée en ce que** ledit au moins composant est un réducteur de vitesse qui est agencé entre l'arbre basse pression (12) et une soufflante de la turbomachine (10).

## Patentansprüche

1. Turbomaschine (10) eines Luftfahrzeugs mit einem primären Luftstromkanal (16), in dem ein Niederdruckkompressor (30) und ein Hochdruckkompressor (32) angeordnet sind,
einen sekundären Luftstromkanal (20), der um den primären Luftstromkanal (16) herum und koaxial zum primären Luftstromkanal (16) angeordnet ist, mit einem Rächer (52) für den im sekundären Luftstromkanal strömenden Luftstrom, mit einer Mehrzahl an Schaufeln, die um eine Hauptachse (A) der Turbomaschine (10) verteilt sind und die zwischen den Schaufeln liegende Plattformen (80) aufweist, von denen sich jede zwischen den inneren radialen Enden (56) oder zwischen den äußeren radialen Enden (58) zweier benachbarter Schaufeln (54) befindet, wobei jede Plattform (80) eine Wand (82) aufweist, die den sekundären Luftstromkanal (20) teilweise abgrenzt,
einen Druckluftkreislauf (40), der Luft zwischen dem Niederdruckkompressor (30) und dem Hochdruckkompressor (32) oder aus dem Hochdruckkompressor (32) entnimmt, um einen Strom von Druckluft zu erzeugen, der zumindest eine Komponente (12) der Turbomaschine (10) versorgt, wobei die zumindest eine Komponente (12) radial in der Turbomaschine (10) in der Nähe einer Hauptachse (A) der Turbomaschine (10) in Bezug auf den primären Luftstromkanal (16) angeordnet ist,
wobei der Druckluftkreislauf (40) zwischen dem Strom der Druckluft und dem in den sekundären Luftstromkanal (20) strömenden Luftstrom einen Wärmetauscher (44) aufweist,
**dadurch gekennzeichnet, dass** der Wärmetauscher (44) durch mindestens eine Plattform (80) gebildet wird, durch die die Druckluft strömt, wobei die Wand (82) der Plattform (80) den Wärmeaustausch zwischen der Druckluft und dem in dem sekundären Luftstromkanal (20) strömenden Luftstrom bewirkt.

2. Turbomaschine (10) nach dem vorherigen Anspruch, **dadurch gekennzeichnet, dass** die Plattform (80) eine Rohrleitung (84) aufweist, durch die die Druckluft strömt und die über eine Schweißung in thermischem Kontakt mit der Wand der Plattform (80) steht.

3. Turbomaschine (10) nach Anspruch 2, **dadurch gekennzeichnet, dass** die Rohrleitung mit mindestens einem Teil der Plattform (80) einstückig ausgebildet ist.

4. Turbomaschine nach Anspruch 2, **dadurch gekennzeichnet, dass** die Rohrleitung (84) aus einem Anbauelement besteht, das an der Wand (82) der Plattform (80) befestigt ist.

5. Turbomaschine (10) nach einem der vorherigen Ansprüche, **dadurch gekennzeichnet, dass** die Plattform (80) eine an einem stromaufwärtigen Ende (94) der Plattform (80) befindliche Eintrittsöffnung (90) für die Druckluft und eine entsprechend der Richtung des Luftstroms in dem sekundären Luftstromkanal (20) an einem stromabwärtigen Ende (96) der Plattform (80) befindliche Austrittsöffnung (92) für die Druckluft aufweist.

6. Turbomaschine (10) nach einem der Ansprüche 1 bis 4, **dadurch gekennzeichnet, dass** die Plattform (80) eine an einem stromabwärtigen Ende (96) der Plattform (80) befindliche Eintrittsöffnung (90) für die Druckluft und eine an einem stromaufwärtigen Ende (94) der Plattform (80) befindliche Austrittsöffnung (92) für die Druckluft aufweist, je nach Richtung des Luftstroms im sekundären Luftstromkanal (20).

7. Turbomaschine (10) nach einem der vorherigen Ansprüche, **dadurch gekennzeichnet, dass** die Plattform (80) aus einem wärmeleitenden Material gefertigt ist.

8. Turbomaschine (10) nach einem der vorherigen Ansprüche, die eine zwischen dem primären und dem sekundären Luftstromkanal liegende Zwischenkanalkammer (18) aufweist,
**dadurch gekennzeichnet, dass** der Druckluftkreislauf (40) in der Richtung des Luftstroms durch diese hindurch aufweist:
- mindestens eine Luftentnahmestelle (42), die von einer radial inneren Wand (24) der Zwischenkanalkammer (18) getragen wird;
- einen stromaufwärtigen Abschnitt (46), der sich durch die Zwischenkanalkammer (18) bis zum sekundären Luftstromkanal (20) erstreckt;
- die zumindest eine Plattform (80);
- einen stromabwärtigen Abschnitt (48), der sich durch die Zwischenkanalkammer (18) von dem sekundären Luftstromkanal (20) bis zum primären Luftstromkanal (16) erstreckt und sich durch einen profilierten Arm (80) erstreckt, der den primären Luftstromkanal (16) durchquert;
- Mittel zur Verteilung der Druckluft zu der zumindest einen Komponente (12) der Turbomaschine (10).

9. Turbomaschine (10) nach einem der vorherigen Ansprüche, **dadurch gekennzeichnet, dass** die zumindest eine Komponente der Turbomaschine eine Niederdruckwelle (12) der Turbomaschine (10) darstellt.

10. Turbomaschine (10) nach einem der vorherigen Ansprüche, **dadurch gekennzeichnet, dass** die zumindest eine Komponente eine Schmieröl-Druckkammer darstellt.

11. Turbomaschine (10) nach einem der vorherigen Ansprüche, **dadurch gekennzeichnet, dass** die zumindest eine Komponente ein Untersetzungsgetriebe darstellt, welches zwischen der Niederdruckwelle (12) und einem Gebläse der Turbomaschine (10) angeordnet ist.

## Claims

1. Aircraft turbomachine (10) comprising a core engine air flow stream (16) passing through a low pressure compressor (30) and a high pressure compressor (32),
a fan air flow stream (20) that is located around the core engine flow stream (16) and coaxially with the core engine flow stream (16), comprising an air flow straightener (52) acting on air passing in the fan flow stream, comprising a plurality of vanes distributed around a principal axis (A) of the turbomachine (10) and that comprises decks between vanes (80), each of which is located between the internal radial ends (56) or between the external radial ends (58) of two adjacent vanes (54), each deck (80) comprising a wall (82) partly delimiting the fan flow stream (20),
a pressurised air circuit (40) that draws off air between the low pressure compressor (30) and the high pressure compressor (32) or in the high pressure compressor (32), to produce a pressurised air flow that supplies at least one component (12) of the turbomachine (10), said at least one component (12) being radially located in the turbomachine (10) closer to a principal axis (A) of the turbomachine (10) than the core engine flow stream (16),
wherein the pressurised air circuit (40) comprises a heat exchanger (44) between the pressurised air flow and the air flow passing through the fan flow stream (20),
**characterised in that** the heat exchanger (44) is formed from at least one deck (80) through which the pressurised air flow passes, said wall (82) of the deck (80) making the heat exchange between the pressurised air flow and the air flow passing in the fan flow stream (20).

2. Turbomachine (10) according to the preceding claim, **characterised in that** the deck (80) comprises a conduit (84) in which the pressurised air flows that is in thermal contact with the wall of the deck (80) by welding.

3. Turbomachine (10) according to claim 2, **characterised in that** the conduit is composed of a single piece with at least part of the deck (80).

4. Turbomachine (10) according to claim 2, **characterised in that** the conduit (84) consists of an add-on element that is fixed to the wall (82) of the deck (80).

5. Turbomachine (10) according to any one of the preceding claims, **characterised in that** the deck (80) comprises a pressurised air inlet port (90) located at an upstream end (94) of the deck (80) and a pressurised air outlet port (92) located at a downstream end (96) of the deck (80), along the air flow direction in the fan flow stream (20).

6. Turbomachine (10) according to any of claims 1 to 4, **characterised in that** the deck (80) comprises a pressurised air inlet port (90) located at a downstream end (96) of the deck (80) and a pressurised air outlet port (92) located at an upstream end (94) of the deck (80), along the air flow direction in the fan flow stream (20).

7. Turbomachine (10) according to any one of the preceding claims, **characterised in that** the deck (80) is made of a heat conducting material.

8. Turbomachine (10) according to claim 1, that comprises an inter-flow stream compartment (18) located between the core engine flow stream and the fan flow stream,
**characterised in that** the pressurised air circuit (40) comprises the following, in the direction of the air flow in the circuit:
- at least one air drawing off point (42) supported by a radially internal wall (24) of the inter-flow stream compartment (18);
- an upstream segment (46) extending through the inter-flow stream compartment (18) as far as the fan flow stream (20);
- said at least one deck (80);
- a downstream segment (48) extending through the inter-flow stream compartment (18) from the fan flow stream (20) to the core engine flow stream (16) and extending through a profiled arm (80) passing through the core engine flow stream (16);
- means of distribution of pressurised air to said at least one component (12) of the turbomachine (10).

9. Turbomachine (10) according to any one of the preceding claims, **characterised in that** said at least one component of the turbomachine is a low pressure shaft (12) of the turbomachine (10).

10. Turbomachine (10) according to any one of the preceding claims, **characterised in that** said at least one component is a lubrication oil pressurisation chamber.

11. Turbomachine (10) according to any one of the preceding claims, **characterised in that** said at least one component is a speed reducer located between the low pressure shaft (12) and a fan of the turbomachine (10).
